# EUROPEAN PATENT APPLICATION

(11) **EP 2 933 872 A1**
(43) Date of publication of application: **21.10.2015**
(21) Application number: 15163396.3
(22) Date of filing: 13.04.2015
(51) Int. Cl.: H01M 10/617, H01M 10/647, H01M 10/6555, H01M 10/6571, H01M 10/48

(54) **TRI-LAYER MATERIAL FOR HEAT SPREADING IN BATTERY PACK MODULES**

(30) Priority: 16.04.2014 US 201461980361 P
(71) Applicant: Southwest Electronic Energy Corporation, Missouri City, TX 77489 (US)
(72) Inventor: White, David Allen, Missouri City, TX Texas 77489 (US); Benckenstein, Claude Leonard, Missouri City, TX Texas 77489 (US)
(74) Representative: Forsythe, Dominic

(57) **Abstract**

An apparatus and method are described for spreading heat, such as generated by an internal short, around battery cells when multiple battery cells are attached together in battery pack module. A tri-layer structure may be placed between battery cells, the tri-layer structure including heat spreading materials and an insulating material. The heat-spreading materials may be graphene sheets that preferentially conduct heat along one dimension. The insulating material may be polyimide. The tri-layer structure may transfer heat along a preferred direction to a location where the heat may be safely distributed or dissipated.

## Description

### CROSS-REFERENCE TO RELATED APPLICATIONS

This application claims the benefit of priority of U.S. Provisional Patent Application No. 61/980,361 to White et al. filed April 16, 2014 and entitled "Try-Layer Material For Heat Spreading In Battery Pack Modules," which is hereby incorporated by reference.

### FIELD OF THE DISCLOSURE

The instant disclosure relates to batteries. More specifically, this disclosure relates to the spreading and dissipation of heat in battery cells and battery pack modules.

### BACKGROUND

Overheated battery cells and battery packs may cause fires and explosions. One cause for the overheating of battery cells is internal shorts. Internal shorts may occur as a result of manufacture defects and/or charge, discharge, or other operation outside of ideal conditions.

Detection of internal shorts that may lead to thermal runaway and eventually fire or explosion is difficult, particularly in a timely fashion. Although internal shorts are difficult to detect, one conventional solution to detect internal shorts is the use of algorithms to detect symptoms within a battery cell that suggest the presence of internal shorts. However, these algorithms are not guaranteed to catch internal shorts and they may not detect the internal short before the internal short causes a thermal runaway event.

Another conventional solution is distributing the heat from an internal short away from the local area of the internal short to slow a rate of heat build-up within the battery pack. For example, heat may be distributed through a thermally conductive compound around the battery cell to dissipate the heat from an internal short to other areas of the battery cell. If heat can be removed sufficiently quickly from an internal short, the internal short may not cause a heat build-up temperature high enough to initiate thermal run away of the cell.

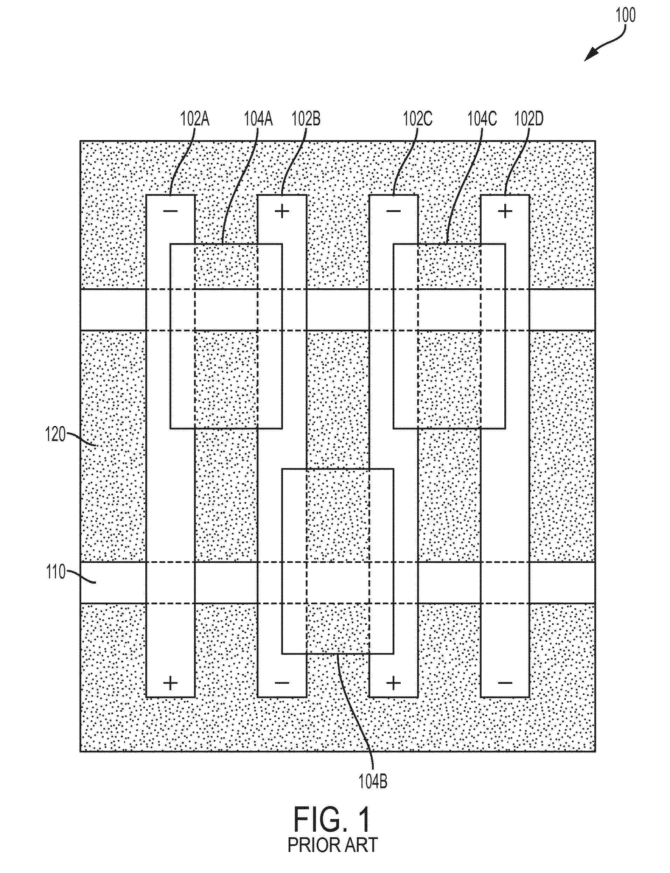

FIGURE 1 is an illustration of a conventional battery module with heat-conducting compound. A battery pack module 100 may include a plurality of battery cells 102A, 102B, 102C, and 102D. The battery cells 102A-D are electrically connected to each other by conductive plates 104A, 104B, and 104C. Battery cells 102A-D may be separated from one another in the battery system 100 by spacers 110, or the spacers 110 may be removed after the battery cells 102A-D are fixed in the module 100. An insulating compound 120 may fill space in the battery pack module 100 between the battery cells 102A-D. Each battery cell 102A, 102B, 102C, and 102D may be separated from each other by about one-tenth of an inch.

The insulating compound 120, such as urethane potting, may be thermally conductive, and thus may provide a thermal connection from each cell to a larger mass (e.g., the entire battery pack module 100) for heat dissipation. The compound may also provide electrical insulation between cells between the battery cells 102A-D

One drawback to the use of this insulating compound 120 is that the compound 120 spreads heat uniformly throughout the battery module 100. That is, heat generated by an internal short in the battery cell 102C may be dissipated throughout the module 100. However, as the heat spreads out uniformly from the location of the internal short a temperature amplitude gradient occurs, in which the gradient is dependent on how quickly heat can be removed from the internal short. Over time as heat is generated, a nearby battery cell, such as the battery cell 102B, may heat beyond ideal operating conditions. As the battery cell 102B heats up, the battery cell 102B becomes more susceptible to a spontaneous thermal run away due to the high temperature resulting from the internal short of cell 102C. Thus, although the battery cell 102B may have been healthy, the battery cell 102B may become unhealthy when the battery cell 102C develops an internal short and generates heat. Some ventilation of heat at an open end of the battery pack module 100 may occur, but this ventilation may be insufficient to prevent heat from transferring from an overheated battery cell to a healthy battery cell in the battery pack module. Thus, other solutions are needed for preventing thermal run away in battery pack modules.

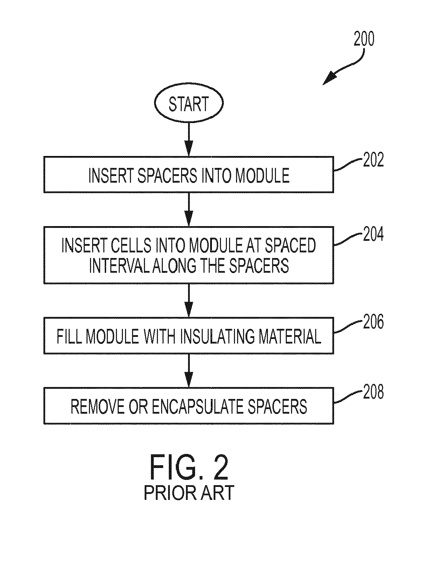

FIGURE 2 is a flow chart illustrating a conventional process of integrating battery cells and the insulating compound into a battery pack module as shown in FIGURE 1. At block 202, the spacers 110 are inserted into the battery pack module 100. At block 204, the battery cells 102A-D are inserted into the battery pack module 100 and spaced from each other along the spacers 110. At block 206, the battery pack module 100 is filled with the insulating compound 120. At step 208, the spacers 110 are either removed from the battery pack module 100 or are encapsulated by the insulating compound and left in place.

In method 200, the battery cells 102A-D may be separated from one another to delay propagation of heat from an overheated battery cell 102B, for example, from spreading to another potentially healthy battery cell 102A, 102C, or 102D. A larger distance of separation from each battery cell may delay the propagation of heat by providing additional mass to heat. Further, a larger distance of separation between battery cells may be used to ensure sufficient backfilling of the heat-conducting compound 120. A larger distance of separation between battery cells 102 results in a battery pack module with a low energy density due to space in the battery pack module 100 not occupied by battery cells.

### SUMMARY

Materials with better characteristics for spreading heat throughout a battery pack module may be used for separating battery cells in a battery pack module. For example, a material with asymmetric dissipation of heat may allow for removal of heat to a portion of the battery pack system module away from battery cells. A material that distributes heat at a higher rate in a lateral dimension along a length of the battery cell than in a dimension away from the battery cell may allow spreading of heat throughout a battery cell reducing the temperature at localized internal short while simultaneously reducing impact to other battery cells in the battery pack module. In one embodiment, the heat may be carried away through these materials to a heat sink for dispersion outside of the battery pack module.

Further, materials for dispersing heat may be thinner and/or physically attached to the battery cells to reduce spacing between battery cells and increase energy density within a battery pack module. For example, heat spreading materials may be attached by an adhesive to a battery cell and a second battery cell attached by an adhesive to the heat spreading materials to form a battery pack module. Reducing space between battery cells in a battery pack module increases the energy density of the battery pack module.

In one embodiment, such a material with some or all of the characteristics described above may be a tri-layer material with a heat spreading layer made of metal, thin graphene sheets, graphene nanoplateletes, and/or pyrolytic graphite attached to either or both sides of an insulating substrate. Graphene may be, for example, deposited on both sides of a polyimide substrate to form a tri-layer sheet. The graphene may preferentially conduct heat along its surface area, rather than vertically thru its thickness and away from the battery cell. The polyimide substrate may thermally insulate a battery cell from a neighboring battery cell while simultaneously electrically insulating the battery cells from conduction of current from one cell to another should heat break down the cell's internal and/or external insulation.

According to one embodiment, an apparatus includes a plurality of battery cells in a battery pack module that are separated by a tri-layer sheet. The apparatus further includes insulating layers and heat spreading layers, a part of the tri-layer sheet, that uniformly spreads heat from overheated battery cells or hot-spots on battery cells to other areas of a battery cell or inside a battery pack module.

According to another embodiment, a tri-layer structure includes a first heat spreading layer that is coupled to a first side of an insulation layer. The tri-layer structure also includes a second heat spreading layer that is coupled to a second side of an insulation layer. The heat spreading layers have a high thermal conductivity and the insulation layer has a low thermal conductivity.

According to a further embodiment, a method for spreading heat between battery cells includes forming a tri-layer structure. The formation of the tri-layer includes depositing a first heat spreading layer on a first side of an insulation layer. The formation further includes depositing a second heat spreading layer on a second side of an insulation layer.

According to a further embodiment, a method of manufacturing a battery pack module includes attaching a tri-layer material to a first side of a first battery cell. The tri-layer material includes a first heat spreading layer, a second heat spreading layer, and an insulation layer. The method also includes stacking a second battery cell on the tri-layer material such that a second side of the battery cell faces the first side of the first battery cell.

The foregoing has outlined rather broadly certain features and technical advantages of embodiments of the present invention in order that the detailed description that follows may be better understood. Additional features and advantages will be described hereinafter that form the subject of the claims of the invention. It should be appreciated by those having ordinary skill in the art that the conception and specific embodiment disclosed may be readily utilized as a basis for modifying or designing other structures for carrying out the same or similar purposes. It should also be realized by those having ordinary skill in the art that such equivalent constructions do not depart from the spirit and scope of the invention as set forth in the appended claims. Additional features will be better understood from the following description when considered in connection with the accompanying figures. It is to be expressly understood, however, that each of the figures is provided for the purpose of illustration and description only and is not intended to limit the present invention.

### BRIEF DESCRIPTION OF THE DRAWINGS

For a more complete understanding of the disclosed system and methods, reference is now made to the following descriptions taken in conjunction with the accompanying drawings.
FIGURE 1 is an illustration of a conventional battery module with heat-conducting compound.
FIGURE 2 is a flow chart illustrating a conventional process of integrating battery cells and the insulating compound into a battery pack module as shown in FIGURE 1.
FIGURE 3 is a block diagram illustrating a tri-layer sheet with an insulating layer and two heat spreading layers according to one embodiment of the disclosure.
FIGURE 4 is a block diagram illustrating heat flow from an overheated battery cell or a hot-spot on a battery cell according to one embodiment of the disclosure.
FIGURE 5 is a block diagram illustrating a battery pack module with tri-layer sheets between battery cells according to one embodiment of the disclosure.
FIGURE 6A is a flow chart illustrating a method of integrating battery cells and tri-layer sheets into a battery pack module according to one embodiment of the disclosure.
FIGURE 6B is a flow chart illustrating another method of integrating battery cells and tri-layer sheets into a battery pack module according to one embodiment of the disclosure.
FIGURE 7 is a block diagram illustrating a battery pack module with heat sink according to one embodiment of the disclosure.
FIGURE 8 is a block diagram illustrating a tri-layer sheet with non-uniform heat conducting layers according to one embodiment of the disclosure.

### DETAILED DESCRIPTION

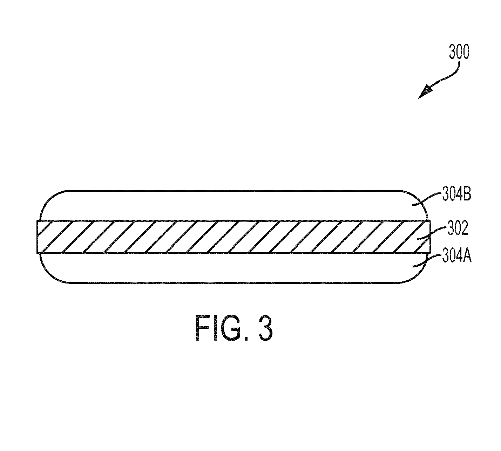

FIGURE 3 is a block diagram illustrating a tri-layer sheet with an insulating layer and two heat spreading layers according to one embodiment of the disclosure. A tri-layer sheet 300 may separate battery cells within a battery pack module. The tri-layer sheet 300 may include an insulating layer 302 and heat spreading layers 304A and 304B.

The insulating layer 302 may be a low thermal conductivity material and may electrically insulate heat spreading layers 304A and 304B from each other. The insulating layer 302 may reduce or prevent the transfer of heat from heat spreading layer 304A to heat spreading layer 304B, thus reducing the rate of transfer of heat from an overheated battery cell to a potentially healthy or non-overheated battery cell. In one embodiment, the insulation layer 302 may be a polymer, such as polyimide sold under the trade name KAPTON, having a thickness of between approximately 10-1000 microns, or more particularly 30-100 microns with a thermal survivability of up to 450 degrees Celsius. The electrical and thermal properties of polyimide may be suitable for use as an electrical and thermal insulator.

The heat spreading layers 304A and 304B may be thermally conductive, such that an internal short generating localized heat may have the heat spread throughout the battery cell. The heat spreading layers 304A and 304B may conduct heat from an overheated battery cell and spread the heat to other areas of the battery cell and/or the battery pack module to be dissipated. In one embodiment, heat spreading layers 304A and 304B may be graphene, graphene nanoplatelets, and/or pyrolytic graphite having a thickness of approximately 10-1000 microns, or more particularly 30-100 microns.

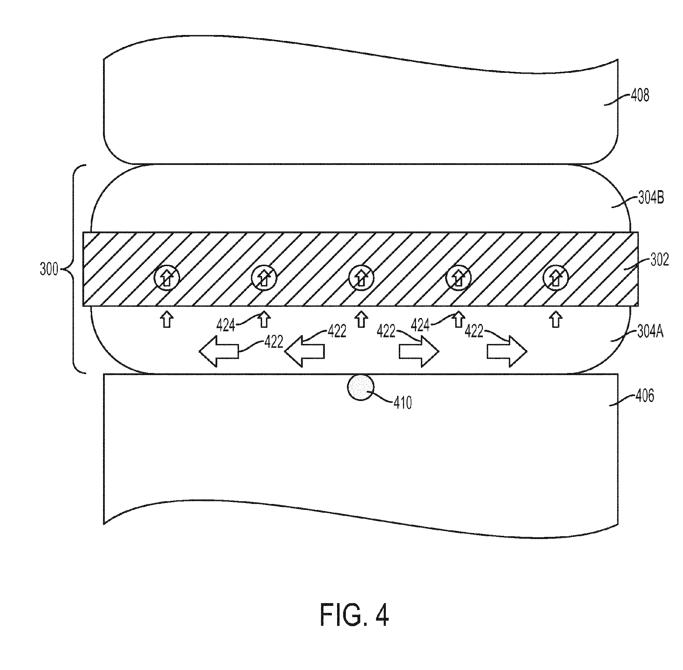

FIGURE 4 is a block diagram illustrating heat flow from an overheated battery cell or a hot-spot on a battery cell according to one embodiment of the disclosure. The tri-layer sheet 300 with insulation material 302 and heat spreading layers 304A and 304B may be placed between battery cells 406 and 408 to provide physical and electrical separation between the battery cells 406 and 408 and thermal and electrical insulation between the battery cells 406 and 408.

A hot-spot 410 may be created on the battery cell 406 due to an internal short. Heat from the hot-spot 410 may be transferred to heat spreading layer 304A. In one embodiment, heat spreading layer 304A may possess a thermal property that preferentially spreads heat in a longitudinal direction 422 of the heat spreading layer 304A, along a length of the battery cell 406 in a direction perpendicular to the normal of the contact surface between the layer 304A and the battery cell 406. The heat spreading layer 304A may have a lower conduction rate of heat along direction 424, along a height of the battery cell 406 and in the direction of a normal of the contact surface between the layer 304A and the battery cell 406, that are normal to a surface of the heat spreading layer 304A. For example, graphene, graphene nanoplatelets, and/or pyrolytic graphite may have an in-plane heat conductivity of approximately 500 W/mK and a thru-plane heat conductivity of approximately 0.12 W/mK. The use of insulating layer 302 between the heat spreading layers 304A-B may further increase the ratio of heat conduction in-plane to thru-plane. Heat propagation in direction 424 may be insulated from heat spreading layer 304B by insulating layer 302. As a result, the battery cell 408 may be thermally shielded from potential damage from the heat generated by the battery cell 406 containing the hot-spot 410.

In one embodiment, battery cell 406 containing hot-spot 410 may be detected and/or removed from the battery pack before damaging other battery cells in the battery pack module. Methods of detecting faulty battery cells is described in in U.S. Patent No. 7,683,575 and U.S. Patent Application Publication No. 2013/0018606, both of which are incorporated by reference.

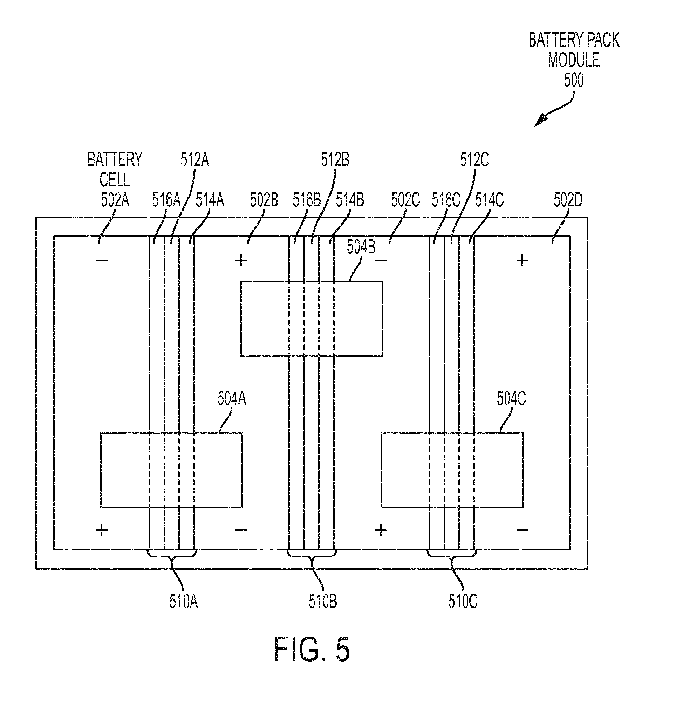

Tri-layer sheets, such as those described with reference to FIGURE 3 and FIGURE 4 may be placed between battery cells in a battery pack module. The tri-layer sheet may thermally insulate battery cells from each other and/or may provide a thermally conductive material to spread heat within a battery cell. FIGURE 5 is a block diagram illustrating a battery pack module with tri-layer sheets between battery cells according to one embodiment of the disclosure. A battery pack module 500 may include a plurality of battery cells 502A, 502B, 502C, and 502D. The battery cells 502A-D may be electrically coupled to each other by conductive plates 504A, 504B, and 504C. Tri-layer sheets 510A, 510B, and 510C may be placed between each pair of battery cells 502A-502B, 502B-502C, 502C-502D, respectively. Tri-layer sheets 510A, 510B, and 510C may include heat spreading layers 514A and 516A, 514B and 516B, and 514C and 516C, respectively, and insulating layers 512A, 512B, and 512C. The battery pack module 500 may also include system components for managing the battery cells 502A-D, such as performing charge balancing operations between battery cells or between the battery pack module 500 and other battery pack modules coupled in series with the battery pack system module. System components for battery pack modules are further described in U.S. Patent No. 8,575,894 and U.S. Patent Application No. 12/899,413, which are incorporated by reference. Although flat battery cells are illustrated in FIGURE 5, other battery cell shapes, such as cylindrical cells and prismatic cells, may be used with the tri-layer structures 510A-C. Further, the battery cells 502A-D may be any chemistry, such as lithium ion (Li-Ion), lithium polymer (Li-Polymer), nickel cadmium (NiCd), and/or lead acid.

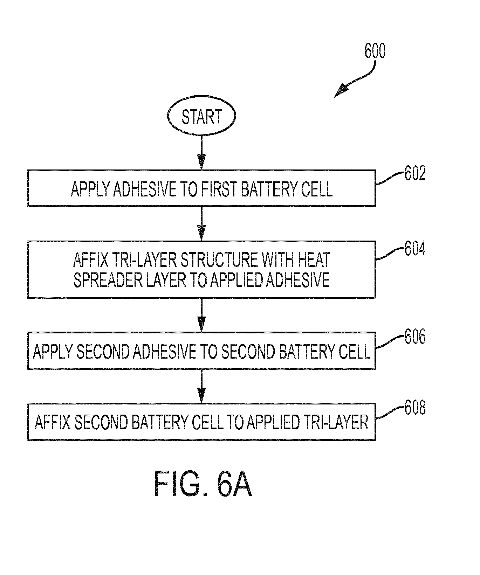

The use of the tri-layer sheets 510A, 510B, and 510C between battery cells may simplify manufacturing as compared to the conventional techniques described above with reference to FIGURE 1 and FIGURE 2. Further, battery cells may be stacked closer within the battery pack module during construction when using tri-layer sheets 510A, 510B, and 510C, which may allow an increase in energy density of the constructed battery pack module. FIGURE 6A is a flow chart illustrating a method of integrating battery cells and tri-layer sheets into a battery pack module according to one embodiment of the disclosure. A method 600 begins at block 602 with application of an adhesive to a first battery cell, such as battery cell 502A of FIGURE 5. At block 604, a tri-layer sheet 510A may be affixed to the applied adhesive (not shown) of battery cell 502A, in which the heat spreading layer 516A faces the side of battery cell 502A. At block 606, a second adhesive (not shown) may be applied to a second battery cell, such as the battery cell 502B. At block 608, the second battery cell 502B with applied second adhesive may be affixed to the tri-layer sheet 510A, in which the heat spreading layer 514A faces the battery cell 502B. The method 600 may be repeated to continue stacking battery cells in a battery pack module

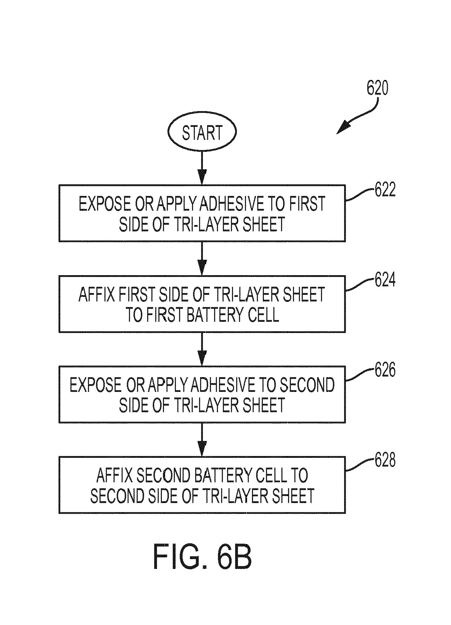

In another embodiment, adhesive may be applied to the tri-layer sheets, rather than the battery cells. FIGURE 6B is a flow chart illustrating another method of integrating battery cells and tri-layer sheets into a battery pack module according to one embodiment of the disclosure. A method 620 begins at block 622 with exposing or applying adhesive to a first side of a tri-layer sheet. In one embodiment, adhesive is applied to the manufactured tri-layer sheet. In another embodiment, adhesive may be integrated with the tri-layer sheet along with a protective sheet, such that the protective sheet may be peeled back just before application of the tri-layer sheet to a battery cell. At block 624, the first side of the tri-layer sheet with the adhesive of block 622 is affixed to a first battery cell. At block 626, adhesive may be exposed or applied to a second side of the tri-layer sheet. Although block 626 is shown after block 624, the adhesive on the second side may be applied or exposed any time before block 628. At block 628, a second battery cell is affixed to the second side of the tri-layer sheet. The method 600 may be repeated to continue stacking battery cells in a battery pack module.

A battery pack module manufactured according to the method of FIGURES 6A-B with a tri-layer structure may allow the module's width to be reduced by about 0.45" while maintaining a certain energy storage quantity, which will reduce the module's volume and weight by more than 12%. The resulting thermal features for safety may also be more robust and safe than the conventional module design..

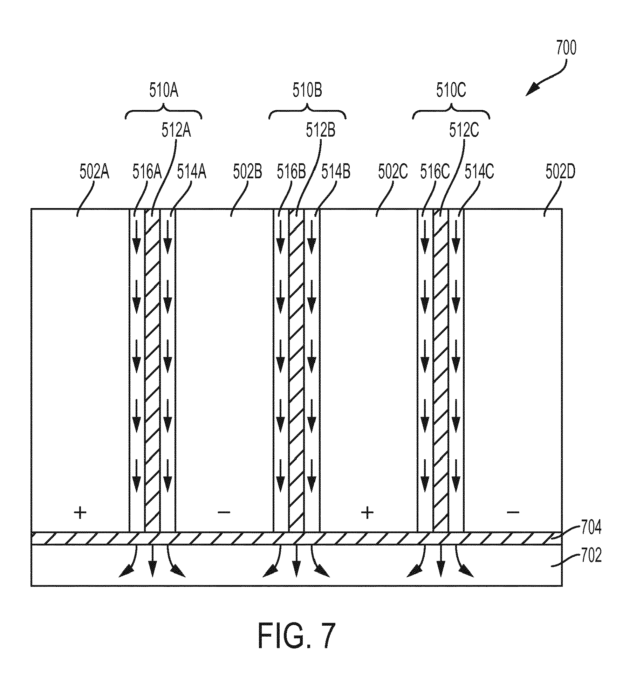

A heat sink, or other fixture, may be attached to a battery pack module and placed in contact with the heat spreading layers of the tri-layer sheet to provide for dissipation of heat generated by internal shorts outside of the battery pack system module. FIGURE 7 is a block diagram illustrating a battery pack module with heat sink according to one embodiment of the disclosure. A heat sink 702 may be affixed or integrated to battery pack module 700. The heat sink 702 may be separated from battery cells 502A-D and the heat conducting layers 514A, 516A, 514B, 516B, 514C, and 516C by insulating layer 704. Tri-layer sheets 510A, 510B, and 510C may be placed between each pair of battery cells 502A-D. The insulating layer 704 may, for example, conduct heat from the heat conducting layers 514A, 516A, 514B, 516B, 514C, and 516C without shorting the battery cells 502A-D.

Hot-spots may occur at any position of the battery cells. Heat from the hot-spots may be transferred to any of the heat spreading layers 514A, 514B, 514C, 516A, 516B, and 516C. Heat transferred to these layers may flow to the heat sink 702 along a direction of preferred heat transfer through the layers. The heat sink may provide a path of heat dissipation from battery cells that contain hot-spots or are generally overheated. In one embodiment, thermally conductive tape may be used instead of or with the heat sink 702. In another embodiment, a fan may be used instead of or with the heat sink 702. In another embodiment, a cooling liquid may be used instead of or with the heat sink 702.

The apparatus illustrated in FIGURE 7 with the heat sink 702 may be manufactured with a similar method to that described in FIGURE 6A and FIGURE 6B by affixing a heat sink to the battery back module after assembling the battery cells with the tri-layer sheets. A similar apparatus could also be constructed with water cooling, fan, and/or thermally conductive tape.

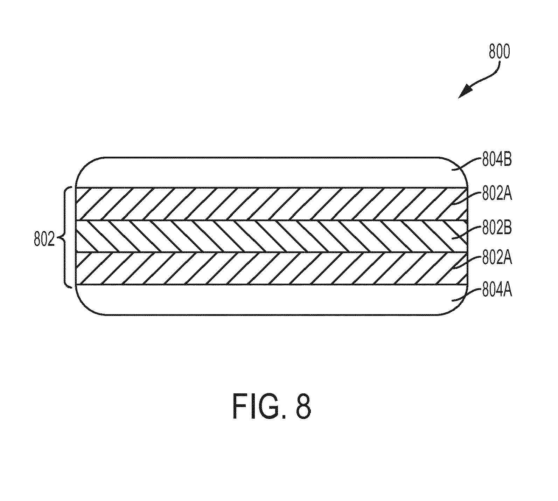

The tri-layer structure may include additional heat conducting layers. FIGURE 8 is a block diagram illustrating a tri-layer sheet with additional heat conducting layers according to one embodiment of the disclosure. A tri-layer sheet 800 may include substrate 802 and heat spreading layers 804A and 804B. Heat spreading layers 804A and 804B may be configured in any shape for the purpose of distributing heat in a desired manner. An additional heat spreading layer 802B may be placed between insulating layers 802A of the substrate 802. The heat spreading layer 802B may be a printed pattern approximately covering a surface area of a battery cell. The heat spreading layer 802B may be at least partially electrically conducting to allow application of an electrical current to heat the heat spreading layer 802B. The electrical current supplied to the heat spreading layer 802B may be supplied from an external source. In one embodiment the external source is the charger for the battery cell and the heat spreading layer 802B receives electrical current from a charge terminal of the battery pack module. In one embodiment, the heat spreading layer 802B may be a graphite material similar to the heat spreading layers 804A-B. Heat may be applied from the heat spreading layer 802B to adjacent battery cells to allow heating of the battery cells, such as when environmental temperatures are too low for safe charge or discharge of the battery cells.

According to one embodiment, electronic circuitry and/or devices may be incorporated into the insulating layer 302 of FIGURE 3 or the insulating layers 802A of FIGURE 8. For example, one or more temperature sensors and/or control circuitry may be embedded in the insulating layer. The control circuitry may be used to measure a temperature from the embedded temperature sensors and determine whether to activate a heater coupled to the heat spreading layer 802B. In one embodiment, the control circuitry may activate and deactivate the heater to maintain the battery cell within a defined temperature band that is at least above a minimum safe temperature for charging the battery cell.

If implemented in firmware and/or software, the functions described above may be stored as one or more instructions or code on a computer-readable medium. Examples include non-transitory computer-readable media encoded with a data structure and computer-readable media encoded with a computer program. Computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc includes compact discs (CD), laser discs, optical discs, digital versatile discs (DVD), floppy disks and blu-ray discs. Generally, disks reproduce data magnetically, and discs reproduce data optically. Combinations of the above should also be included within the scope of computer-readable media.

In addition to storage on computer readable medium, instructions and/or data may be provided as signals on transmission media included in a communication apparatus. For example, a communication apparatus may include a transceiver having signals indicative of instructions and data. The instructions and data are configured to cause one or more processors to implement the functions outlined in the claims.

Although the present disclosure and certain representative advantages have been described in detail, it should be understood that various changes, substitutions and alterations can be made herein without departing from the spirit and scope of the disclosure as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the present disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.

## Claims

1. An apparatus, comprising:
a first battery cell;
a second battery cell;
a first heat spreading layer coupled to the first battery cell;
a second heat spreading layer coupled to the second battery cell; and
an insulating layer between the first heat spreading layer and the second heat spreading layer,
wherein the first heat spreading layer, the second heat spreading layer, and the insulating layer comprise a tri-layer sheet inserted between the first battery cell and the second battery cell.

2. The apparatus of claim 1, wherein the first heat spreading layer and the second heat spreading layer comprise a material with a higher thermal conductivity along a first direction than a second direction, the heat spreading layer oriented on the first battery cell such that the first direction is perpendicular to a normal vector of a top surface of the first battery cell, and wherein the second direction is perpendicular to the first direction.

3. The apparatus of claim 1 or 2, wherein the insulating layer comprises a material with low thermal conductivity along the second direction, wherein, optionally, the insulating layer comprises polyimide.

4. The apparatus of any preceding claim, wherein the first heat spreading layer is attached to the first battery cell by an adhesive.

5. The apparatus of any preceding claim, wherein the insulating layer comprises:
a first insulating portion;
a second insulating portion; and
a third heat spreading layer between the first insulating portion and the second insulating portion.

6. The apparatus of claim 5, further comprising temperature sensors embedded in at least one of the first insulating portion and the second insulating portion.

7. The apparatus of claim 6, further comprising a heater circuit coupled to the third heat spreading layer for distributing heat throughout at least one of the first battery cell and the second battery cell, wherein, optionally: the heater circuit is coupled to a charge terminal of at least one of the first battery cell and the second battery cell.

8. The apparatus of claim 7, further comprising a control circuit coupled to the heater circuit and coupled to the temperature sensors and configured to turn on the heater circuit when the temperature sensor indicates a temperature below a first threshold.

9. A tri-layer structure for spreading heat between battery cells, comprising:
a first heat spreading layer coupled to a first side of an insulating layer; and
a second heat spreading layer coupled to a second side of the insulating layer.

10. A method of forming a tri-layer structure for spreading heat between battery cells, comprising:
depositing a first heat spreading layer on a first side of an insulating layer; and
depositing a second heat spreading layer on a second side of the insulating layer, the second side being a face facing an opposite direction from a face of the first side.

11. The method of claim 10, wherein depositing the first heat spreading layer comprises depositing graphene.

12. A method of manufacturing a battery pack system module, comprising:
attaching a tri-layer material comprising a first heat spreading layer, an insulating layer, and a second heat spreading layer to a first side of a first battery cell, wherein the first heat spreading layer is in thermal contact with the first battery cell; and
stacking a second battery cell on the tri-layer material such that a second side of the second battery cell faces the first side of the first battery cell, wherein the second heat spreading layer is in thermal contact with the second battery cell.

13. The method of claim 12, further comprising attaching a heat sink to the tri-layer material, the heat sink located external to the first battery cell and the second battery cell.

14. The method of claim 12 or 13, wherein the step of attaching the tri-layer material comprises adhering the tri-layer material to the first battery cell.

15. The apparatus of any of claims 1-8, the tri-layer structure of claim 9, or the method of any of claims 10-14, wherein the first heat spreading layer and the second heat spreading layer comprise at least one of graphene sheets, graphene nanoplatelets, and pyrolytic graphite, wherein, optionally, the insulating layer comprises polyimide.
